# EUROPEAN PATENT APPLICATION

(11) **EP 4 502 798 A1**
(43) Date of publication of application: **05.02.2025**
(21) Application number: 23209915.0
(22) Date of filing: 14.11.2023
(51) Int. Cl.: G06F 9/455, G06F 11/14

(54) **RACE FREE VIRTUAL MACHINE SNAPSHOTS**

(30) Priority: 31.07.2023 US 202318362617
(71) Applicant: Red Hat, Inc., Raleigh, NC 27601 (US)
(72) Inventor: TSIRKIN, Michael, Raleigh (US)
(74) Representative: Murgitroyd & Company

(57) **Abstract**

A hypervisor executing on a host computing system causes an existing connection between a virtual machine implemented by the hypervisor and an entity separate from the virtual machine to close. The hypervisor creates a snapshot of the virtual machine.

## Description

### BACKGROUND

Virtualization technologies, such as virtual machine (VM) technologies, are increasingly popular because they allow more efficient utilization of a host computing device by allowing multiple isolated computing environments to run on a single host computing device. A virtual machine monitor, sometimes referred to herein as a hypervisor, executes between the "bare metal" of the host computing device, i.e., the processor cores and the memory of the host computing device and the VMs, and manages and otherwise coordinates access to the processor cores and the memory by the VMs running on the host computing device. VMs are widely used by cloud computing providers that provide on-demand computing services to multiple tenants (i.e., customers).

### SUMMARY

Implementations described herein provide race-free virtual machine snapshots to eliminate a potential vector for non-repeatable communications (e.g., one-time transmissions, etc.) being repeated. In particular, a hypervisor that implements a virtual machine can cause the virtual machine to close existing connections between the virtual machine and entities external to the virtual machine (e.g., computing devices, databases, storage devices, etc.). The hypervisor can create a snapshot of the virtual machine.
In one implementation, a method is provided. The method includes causing, by a hypervisor executing on a host computing system, an existing connection between a virtual machine implemented by the hypervisor and an entity separate from the virtual machine to close. The method includes creating, by the hypervisor, a snapshot of the virtual machine. Prior to causing the existing connection between the virtual machine and the entity separate from the virtual machine to close, the method may comprise: determining, by the hypervisor, that the existing connection exists between the virtual machine and the entity separate from the virtual machine. Determining that the existing connection exists may comprises: detecting, by the hypervisor, the existing connection between the virtual machine and the entity separate from the virtual machine. Determining that the existing connection exists may comprise: receiving, by the hypervisor from the virtual machine, information indicative of the existing connection between the virtual machine and the entity separate from the virtual machine. Prior to receiving the information indicative of the existing connection, the method may comprise: providing, by the hypervisor to the virtual machine, information indicative of a request to report any existing connections between the virtual machine and entities separate from the virtual machine. Receiving the information indicative of the existing connection between the virtual machine and the entity separate from the virtual machine may comprise: receiving, by the hypervisor, information indicative of a plurality of existing connections between the virtual machine and a respective plurality of entities separate from the virtual machine; and identifying, by the hypervisor, a first existing connection of the plurality of existing connections as a non-repeatable connection that is to be closed prior to snapshot creation. Causing the existing connection between the virtual machine implemented by the hypervisor and the entity separate from the virtual machine to close may comprises: providing, by the hypervisor to the virtual machine, information indicative of a request to close the existing connection between the virtual machine and the entity separate from the virtual machine. Providing the information indicative of the request to close the existing connection further may comprises: receiving, by the hypervisor from the virtual machine, information indicating that the existing connection has been closed. Providing the information indicative of the request to close the existing connection between the virtual machine and the entity separate from the virtual machine may further comprise: determining, by the hypervisor, that the existing connection between the virtual machine and the entity separate from the virtual machine has been closed. Providing the information indicative of the request to close the existing connection may comprise: providing, by the hypervisor, a request to close any existing connections between the virtual machine and entities separate from the virtual machine. Causing the existing connection between the virtual machine implemented by the hypervisor and the entity separate from the virtual machine to close may comprise: stopping, by the hypervisor, execution of a virtual network interface module of the virtual machine. The method may further comprise: causing, by the hypervisor, a second existing connection between a second virtual machine implemented by the hypervisor and an entity separate from the second virtual machine to close; and creating, by the hypervisor, a snapshot of the second virtual machine. The method may further comprise: determining, by the hypervisor, that a third existing connection between a third virtual machine implemented by the hypervisor and an entity separate from the third virtual machine is repeatable; and creating, by the hypervisor, a snapshot of the third virtual machine. Creating the snapshot of the virtual machine may comprise: creating, by the hypervisor, the snapshot of the virtual machine, wherein the snapshot of the virtual machine is descriptive of a current state of the virtual machine; and wherein the method further comprises causing, by the hypervisor, the virtual machine to be restored to the current state based on the snapshot of the virtual machine.
In another implementation, a host computing system is provided. The host computing system includes a memory and one or more processor devices. The one or more processor devices are to cause an existing connection between a virtual machine implemented by a hypervisor and an entity separate from the virtual machine to close, wherein the hypervisor is executed on the host computing system. The one or more processor devices are to create a snapshot of the virtual machine. Prior to causing the existing connection between the virtual machine and the entity separate from the virtual machine to close, the processor devices may be to: determine that the existing connection exists between the virtual machine and the entity separate from the virtual machine. Determining that the existing connection exists may comprise: detecting the existing connection between the virtual machine and the entity separate from the virtual machine. Determining that the existing connection exists may comprise: receiving, from the virtual machine, information indicative of the existing connection between the virtual machine and the entity separate from the virtual machine. Prior to receiving the information indicative of the existing connection, the processor devices may be to: provide, to the virtual machine, information indicative of a request to report any existing connections between the virtual machine and entities separate from the virtual machine.

In another implementation, a non-transitory computer-readable storage medium is provided. The non-transitory computer-readable storage medium includes executable instructions to cause one or more processor devices to cause an existing connection between a virtual machine implemented by a hypervisor and an entity separate from the virtual machine to close, wherein the hypervisor executes on the one or more processor devices. The instructions further cause the processor device to create a snapshot of the virtual machine.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1A illustrates a computing environment at a first time T1 according to some implementations of the present disclosure.
Figure 1B illustrates the computing environment at a second time T2 subsequent to the first time T1 according to some implementations of the present disclosure.
Figure 1C illustrates the computing environment at a third time T3 subsequent to the first time T1 according to some implementations of the present disclosure.
Figure 2A is a flowchart of a method for creating race-free virtual machine snapshots according to some implementations of the present disclosure.
Figure 2B is a flowchart of a method for closing existing connections to facilitate creation of race-free virtual machine snapshots according to some implementations of the present disclosure.
Figure 3A is a block diagram of a host computing system suitable for implementing aspects illustrated in Figures 1A-1C according to some implementations of the present disclosure.
Figure 3B is a block diagram of a host computing system suitable for implementing aspects illustrated in Figures 1A-1C according to some other implementations of the present disclosure.
Figure 4A is a block diagram of a host computing system according to some implementations.
Figure 4B is a block diagram of a host computing system according to some other implementations.
Figure 5 is a simplified block diagram of the computing environment illustrated in Figures 1A and 1B, according to some implementations of the present disclosure.
Figure 6 is a block diagram of the host computing system suitable for implementing examples according to one example.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Virtualization technologies, such as virtual machine (VM) technologies, are increasingly popular because they allow more efficient utilization of a host computing device by allowing multiple isolated computing environments to run on a single host computing device. A virtual machine monitor, sometimes referred to herein as a hypervisor, executes between the "bare metal" of the host computing device, i.e., the processor cores and the memory of the host computing device and the VMs, and manages and otherwise coordinates access to the processor cores and the memory by the VMs running on the host computing device. VMs are widely used by cloud computing providers that provide on-demand computing services to multiple tenants (i.e., customers).

The term "snapshot" as used herein refers generally to the mechanism by which a particular computer architecture implements the ability to concurrently maintain multiple different chronological states of an entity, such as a storage unit or a virtual machine. The term "snapshot" as used herein, when used as a command or operation, refers to the generation, at a particular instance in time, of information that preserves the current state of the entity being snapshotted. With reference to a storage unit, the term "snapshot layer" as used herein refers to the actual data structure generated that preserves the state of the storage unit at that instance in time. The implementation of a snapshot may differ depending on the particular file system or computer architecture at issue. In a Linux environment, the snapshot layer may be implemented via a volume that is related to but separate from the volume in which future modifications of the storage unit will be reflected. When a VM is snapshotted, aspects of the current state of the VM may also be captured, such as a current state of the memory, a current state of the configuration of the VM, the storage units used by the VM at the time of the snapshot, and other information relevant to restoring the VM at that instant in time. Snapshotting a VM may, by default, cause the storage units used by the VM to be snapshotted.

Because a snapshot of a virtual machine (VM) in an electronic computing environment maintains the state of the VM, and any storage units used by the VM, at the time of the snapshot, the VM may subsequently be restarted to the state of the VM at the time of the snapshot. The VM will operate as if any modifications to the VM, or any storage units used by the VM, after the time of the snapshot never occurred.

When a VM is restored from a snapshot of the VM at a previous point in time, the VM will attempt to repeat the same actions being performed when the snapshot was created. These actions can include exchanging information over existing connections with external entities, such as databases, external computing systems, etc. When an exchange is meant to be performed once, repeating the same transaction can present substantial problems. For example, assume that a snapshot of a VM is created while the VM is in the process of incrementing a value in a database over an existing connection. If the VM successfully increments the value in the database over the existing connection, and is then restored from the snapshot, the VM will repeat the process of incrementing the value in the database and thus inadvertently cause the value to be incremented twice.

Accordingly, implementations of the present disclosure propose race-free virtual machine snapshots. In particular, rather than creating a snapshot of a VM with an existing connection, a hypervisor that implements the VM can cause the existing connection between the VM and a separate entity to be closed. Once closed, the hypervisor can create the snapshot and restore the VM from the snapshot. For example, if the hypervisor receives a request to create a snapshot of the VM, the hypervisor can provide instructions to the VM to close any existing connections with separate entities. Upon receiving confirmation of connection closure from the VM, the hypervisor can create the snapshot of the VM. In such fashion, the hypervisor can ensure that a VM is not snapshotted with existing connections, therefore eliminating the substantial risks and inefficiencies caused by duplicating actions performed over existing connections.

Implementations of the present disclosure present a number of technical effects and benefits. For example, implementations described herein eliminate a potential vector for inadvertently duplicating exchanges of information. As described previously, the inadvertent duplication of certain information exchanges can cause errors and inaccuracies in systems that receive information from the VM. In turn, these errors can require the expenditure of substantial computing resources to remedy. For example, if a one-time incrementing of a database value is repeated, it may be necessary to restore the database from a backup copy, which can require a substantial expenditure of computing resources (e.g., power, memory, storage, compute cycles, etc.). Thus, by ensuring that such transactions are not repeated via snapshot restoration, implementations of the present disclosure can more efficiently utilize computing resources.

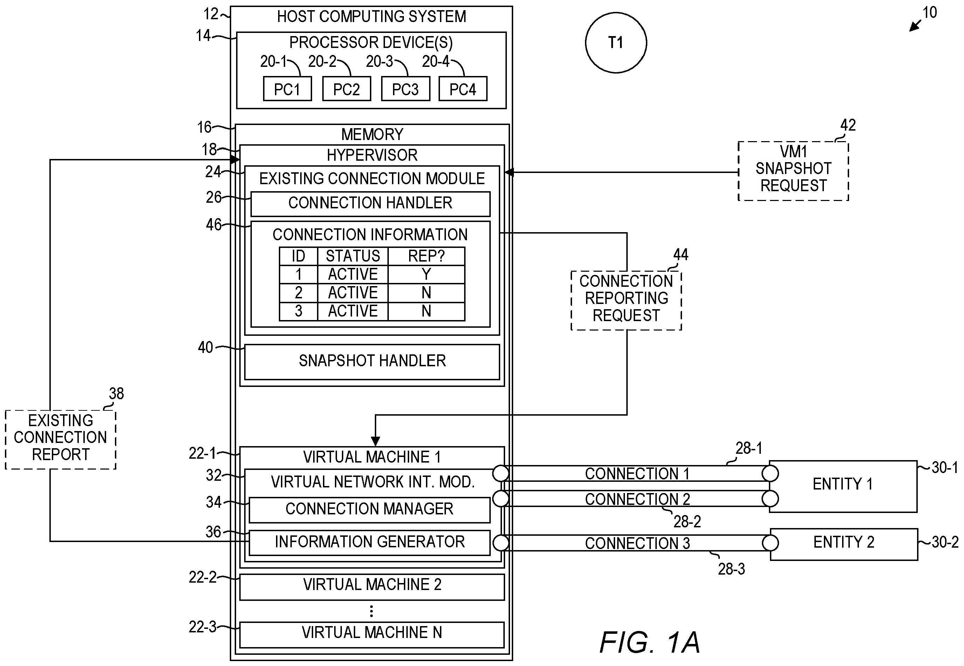

Figures 1A-1C are block diagrams illustrating a computing environment 10 for race-free virtual machine snapshots at times T1, T2, and/or T3 according to some implementations of the present disclosure. In particular, Figure 1A illustrates the computing environment 10 at a first time T1 according to some implementations of the present disclosure. The computing environment 10 can include a host computing system 12. The computing environment 10 may be, or otherwise include, a cloud computing environment, such as an Amazon^{®} Amazon Web Services (AWS) cloud computing environment or a Microsoft^{®} Azure cloud computing environment. Referring first to Figure 1A, the environment 10 includes a host computing system 12. The host computing system 12 includes a processor device 14 that is coupled to a memory 16. The memory 16 includes a hypervisor 18 that, as described in detail herein, implements aspects of the disclosed examples.

The memory 16 can be or otherwise include any device(s) capable of storing data, including, but not limited to, volatile memory (random access memory, etc.), non-volatile memory, storage device(s) (e.g., hard drive(s), solid state drive(s), etc.). In particular, the memory 16 can, in some implementations, include a containerized unit of software instructions (i.e., a "packaged container"). The containerized unit of software instructions can collectively form a container that has been packaged using any type or manner of containerization technique.

A virtual machine monitor, referred to herein as the hypervisor 18, implements a virtualized environment via VM virtualization technology on the host computing system 12. The VM virtualization technology may comprise, by way of non-limiting example, Red Hat^{®} Enterprise Linux^{®} virtualization technology, VMware^{®} virtualization technology, Microsoft^{®} Hyper-V virtualization technology, Oracle^{®} VM Server for SPARC virtualization technology, or the like.

It will be noted that because the hypervisor 18 is a component of the host computing system 12, functionality implemented by the hypervisor 18 may be attributed to the host computing system 12 generally. Moreover, because the hypervisor 18 comprises software instructions that program the processor device 14 to carry out functionality discussed herein, functionality implemented by the hypervisor 18 may be attributed herein to the processor device 14.

The hypervisor 18 can implement, and actively manage, VMs 22-1 - 22-N (generally, VMs 22). It should be noted that the hypervisor 18 is illustrated as being located on the same host computing system 12 as the VMs 22, the hypervisor 18 can implement the VMs 22 from any type or manner of computing device within (or outside) the computing environment 10. For example, the VM 22-1 may be implemented at least in part with processor core 20-1 and memory 16 of the host computing system 12, while VM 22-2 may be implemented via some other memory and processor device separate from the host computing system 12.

The processor device 14 comprises four processor cores 20-1 - 20-4 (PC1, PC2, PC3, and PC4, respectively) (generally, processor cores 20). The processor device 14 may comprise any suitable processor device, such as, by way of non-limiting example, Intel^{®} processor devices and AMD^{®} processor devices.

The hypervisor 18 implements a race-free snapshot feature to create a snapshot of a VM that does not inadvertently repeat one-time information exchanges. In particular, the hypervisor 18 can include an existing connection module 24. The existing connection module 24 is generally responsible for implementing connections with entities separate from the host computing system 12. In some implementations, to do so, the existing connection module 24 can include a connection handler 26. The connection handler 26 can handle existing connections by establishing connections, maintaining existing connections, exchanging information via existing connections, closing existing connections, etc.

In particular, the connection handler 26 can establish connections 28-1 - 28-3 (generally, connections 28) between the VM 22-1 and entities 30-1 and 30-2 (generally entities 30) separate from the virtual machine. Connections, as described herein, may also be referred to as "existing connections." The entities 30 can be any type or manner of entity other than the virtual machine to which the entities 30 are connected, such as a virtual machine, computing device, computing system, wearable device, compute node, containerized unit of software instructions, database, API, website, memory, storage device, virtualized device, etc. The VM 22-1 can exchange information with the entities 30 over the connections 28 using a virtual network interface module 32. The virtual network interface module 32 can be any type or collection of hardware and/or software resources configured to implement networking capabilities for the virtual machine 22-1 (e.g., a virtualized network interface card (VNIC), etc.).

As described previously, in some implementations, the hypervisor 18 can include a connection handler 26. Additionally, or alternatively, in some implementations, the virtual network interface module 32 of the VM 22-1 can include a connection handler 34. The connection handler 34 can handle connections 28 between the VM 22-1 and the entities 30 in the same manner as described with regards to the connection handler 26. For example, assume that the entity 30-1 includes a database that exchanges information via an application programming interface (API). The connection handler 34 can format or re-format information so that the information can be exchanged with the entity 30-1 via the API (e.g., wrapping information in a JavaScript Object Notation (JSON) object, etc.).

The VM 22-1 can include an information generator 36. The information generator 36 can generate information to be provided to the hypervisor 18. For example, the information generator 36 can generate an existing connection report 38 that describes currently existing connections 28 between the VM 22-1 and the entities 30. For another example, if the VM closes one of the connections 28 with the entities 30, the information generator 36 can generate information indicating completion of closure of the connection 28 for the hypervisor 18.

The hypervisor 18 can include a snapshot handler 40. The snapshot handler 40 can create snapshots of the VMs 22, and/or can otherwise cause snapshots of the VMs 22 to be created. For example, the snapshot handler 40 can directly create a snapshot of the VM 22-1. For another example, the snapshot handler 40 can instruct some other module or resource of the host computing system 12 or some other device within the computing environment 10 to create the snapshot.

The snapshot handler 40 can determine that a snapshot is to be created for the VM 22-1. In some implementations, the snapshot handler 40 can determine the snapshot is to be created based on a snapshot request 42 received by the hypervisor 18 that requests a snapshot be created for the VM 22-1. Additionally, or alternatively, in some implementations, the snapshot handler 40 can determine the snapshot is to be created based on some other criteria. For example, the snapshot handler 40 may automatically create snapshots on a regular schedule for all VMs 22. For another example, the snapshot handler 40 may automatically create snapshots after certain action(s) are performed by one of the VMs 22 (e.g., exchanging a certain quantity of data, receiving a certain number and/or type of user inputs, etc.).

If the snapshot handler 40 determines that a snapshot is to be created of the VM 22-1, the snapshot handler 40 can determine whether there are any existing connections 28 between the VM 22-1 and any entities separate from the VM 22-1, such as entities 30. In some implementations, the snapshot handler 40 can determine whether there are any existing connections 28 based on the existing connection report 38. The existing connection report 38 can describe existing connections between the VM 22-1 and the entities 30, or existing connections between the VM 22-1 and entities external to the computing environment 10. To follow the depicted example, the existing connection report 38 can describe the connections 28-1 and 28-2 between the VM 22-1 and the entity 30-1, and the connection 28-3 between the VM 22-1 and the entity 30-2.

VMs 22 can provide existing connection reports 38 to the hypervisor 18 at regular intervals and/or in particular instances. For example, the VM 22-1 may provide the existing connection report 38 to the hypervisor 18 at regular intervals based on a user input, current network and/or compute conditions, etc. For another example, the existing connection module 24 may, upon receipt of the snapshot request 42, provide a connection reporting request 44 to the VM 22-1 requesting that the existing connection report 38 be generated and provided to the hypervisor 18.

Additionally, or alternatively, in some implementations, the snapshot handler 40 can determine whether there are any existing connections 28 between the VM 22-1 and any entities separate from the VM 22-1 based on activity from the VM 22-1 and/or operations performed by the VM 22-1. For example, the snapshot handler 40 can detect information exchanged via the virtual network interface module 32. For another example, the snapshot handler 40 can detect some other manner of operations performed by the VM 22-1 that are likely to result from existing connections 28 between the VM 22-1 and entities 30.

The existing connection module 24 can store connection information 46. The connection information 46 can track a current state of existing connections between the VM 22-1 and the entities 30. To follow the depicted example, the connection information 46 can indicate that the connections 28-1, 28-2, and 28-3 are all currently active. In some implementations, the connection information 46 can indicate whether a connection is non-repeatable. A repeatable connection over which information is exchanged that does not cause deleterious effects when inadvertently duplicated. For example, the connection 28-2 may be a connection over which financial transactions are conducted, and as such, is a non-repeatable connection (e.g., a REP value of N). For another example, the connection 28-1 may be a connection over which status updates are sent from the VM 22-1 to the entity 30-1. Because status updates generally high-frequency, and generally do not cause deleterious effects when repeated, the connection 28-1 can be a repeatable connection (e.g., a "REP" value of Y).

The repeatability of the connections 28 can be determined based on various criteria. For example, the repeatability of the connections 28 can at least partially be determined based on a quantity of information exchanged via the connection, or a type of information exchanged via the connection (e.g., encrypted information, sensitive information, unique information, etc.). Additionally, or alternatively, in some implementations, the existing connection report 38 can indicate whether the connections 28 is repeatable. For example, the existing connection report 38 can indicate that the connection 28-1 is not a repeatable connection and that the connection 28-2 is a repeatable connection.

In some implementations, the "repeatability" value stored by the connection information 46 can represent a probability that, if a connection is included in a snapshot, the exchange of non-repeatable information will be inadvertently repeated. For example, assume that the connection 28-1 is used to exchange non-repeatable information, but exchange of such information is relatively rare (e.g., once or twice a day, etc.). Although the connection 28-1 is used to exchange non-repeatable information, the non-repeatable information is exchanged at a low frequency, and as such, there is a relatively low risk of a non-repeatable information exchange being repeated if the connection is snapshotted. For another example, assume that the connection 28-1 is used to exchange non-repeatable information at a high frequency. Due to the frequency at which the non-repeatable information exchanges occur, there is a relatively high risk of a non-repeatable information exchange being repeated if the connection is snapshotted.

In some implementations, if the connection information 46 stores a binary "repeatability" value (e.g., Yes or No), the value can be determined based on a threshold probability of non-repeatable information being repeated. For example, the existing connection module 24 may instruct the snapshot handler to refrain from creating a snapshot if an existing connection has a probability of non-repeatable information being repeated higher than 0%, 10%, 20%, etc.

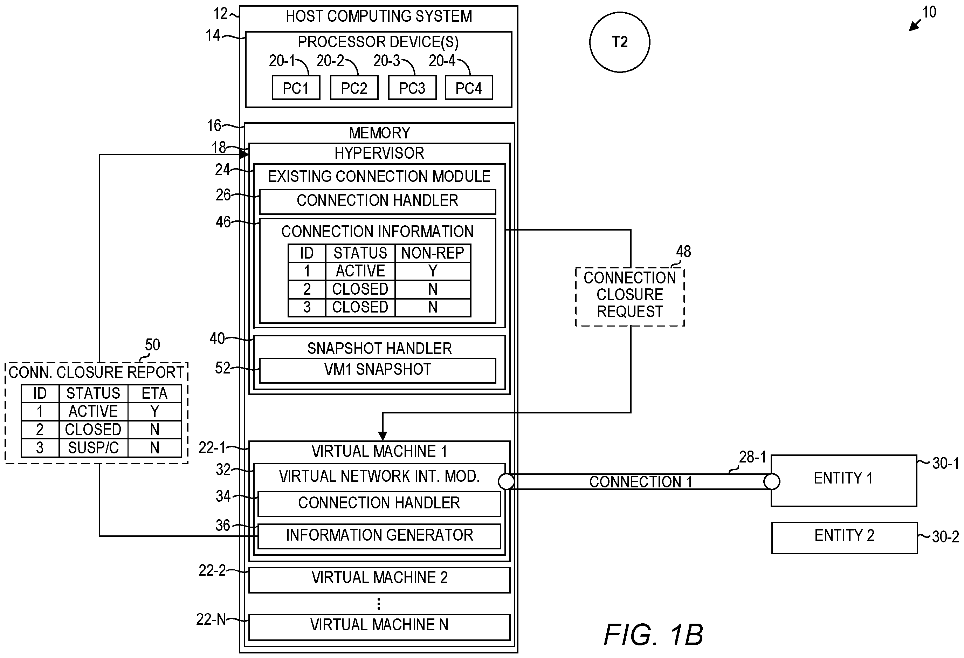

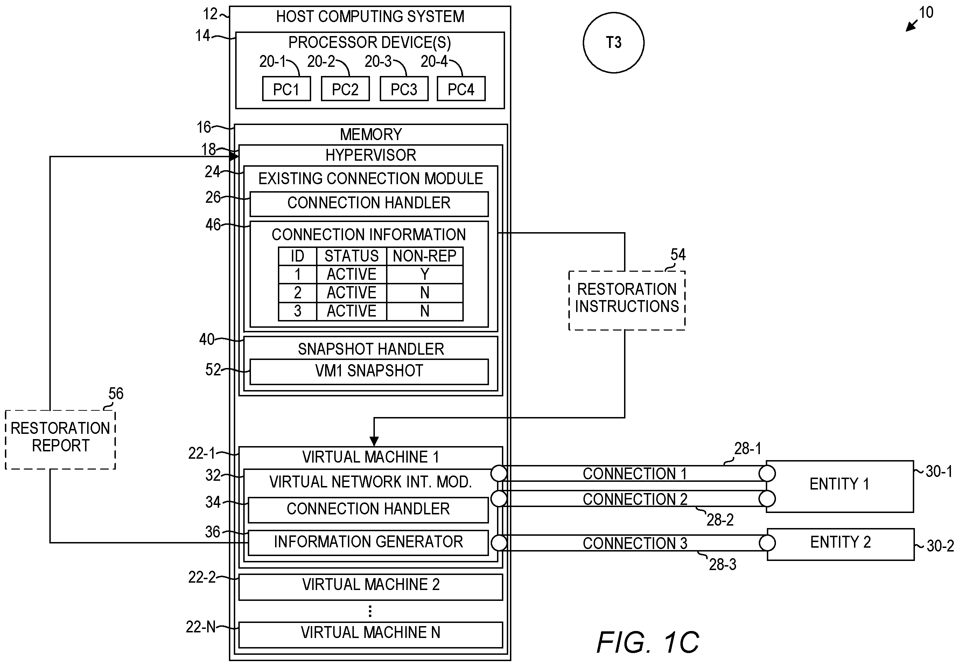

Based at least in part on the connection information 46, the snapshot handler 40 can determine whether to create a snapshot of the virtual machine. Creation of snapshots with regards to existing connections will be discussed in greater detail with regards to Figures 1B and/or 1C.

Turning to Figure 1B, Figure 1B illustrates the computing environment 10 at a second time T2 subsequent to the first time T1 according to some implementations of the present disclosure. At either time T1, or time T2, the hypervisor 18 can cause the VM 22-1 to close some (or all) of the existing connections 28 between the entities 30 and the VM 22-1.

In some implementations, the connection handler 26 can cause the VM 22-1 to close some (or all) of the existing connections 28 by providing a connection closure request 48 to the VM 22-1. The connection closure request 48 can indicate some (or all) of the existing connections 28 to be closed by the VM 22-1. In response, the VM 22-1 can attempt to close the connection(s) 28 indicated by the closure request 48, and can send a connection closure report 50 to the hypervisor 18. The connection closure report 50 can indicate whether the connection(s) 28 indicated by the connection closure request 48 were successfully closed by the VM 22-1. In some implementations, if a connection is not successfully closed, the connection closure report 50 can indicate include a related error code or some other type of information indicating why connection closure did not succeed.

In some implementations, the connection closure request 48 can request that the VM 22-1 close all connections 28 indicated as non-repeatable by the connection information 46. To follow the depicted example, the connection closure request 48 can request that non-repeatable connections 28-2 and 28-3 be closed by the VM 22-1.

Additionally, or alternatively, in some implementations, the connection closure request 48 can describe certain connection criteria and a request to close any connections that do not meet the connection criteria. Connection criteria can include a quantity of information exchanged over the connection, a type of information exchanged, a rate at which information is exchanged, a timestamp for the last time at which information was exchanged, etc. Alternatively, in some implementations, the connection closure request 48 can request that the VM 22-1 closes any and all existing connections to entities 30. The VM 22-1 can close certain existing connections 28 between the VM 22-1 and the entities 30 with the connection handler 34 of the virtual network interface module 32. Alternatively, the VM 22-1 can close all existing connections 28 by stopping, pausing, or otherwise disrupting execution or implementation of the virtual network interface module 32.

Additionally, or alternatively, in some implementations, the connection handler 26 can close some (or all) of the connections 28. For example, assume that the connection handler 26 sends a connection closure request 48 to the VM 22-1 indicating the connection 28-2 for closure, and, in response, receive the connection closure report 50. If the connection closure report 50 indicates that closure of the connection 28-1 was unsuccessful, the connection handler 26 can close the connection 28-1. To follow the depicted example, the connection closure request 48 can indicate connections 28-2 and 28-3 as non-repeatable connections to be closed. The connection handler 34 can close the connections 28-2 and 28-3, and the connection closure report 50 can indicate that connections 28-2 and 28-3 have been closed successfully.

In some implementations, the connection handler 26 of the existing connection module 24 can close some (or all) of the connections 28 by stopping execution of the virtual network interface module 32 of the VM 22-1. For example, the connection handler 26 may provide instructions to the VM 22-1 instructing the VM to stop execution of the virtual network interface module 32. For another example, the connection handler 26 may remove access to resources utilized by the VM 22-1 to implement the virtual network interface module 32, or may perform some other of modifications to the VM 22-1 that result in the virtual network interface module 32 closing the indicated connections.

In some implementations, if the VM 22-1 receives the connection closure request 48 while actively exchanging information via one of the connections 28 indicated by the connection closure request 48 for closure, the VM 22-1 can determine whether to refrain from closing the connection 28 until the exchange of information is complete. The determination made by the VM 22-1 can be based on a variety of factors, including the repeatability of the exchange, the importance of the exchange, the time remaining in the exchange, the availability of the entity with which the exchange is occurring, etc.

For example, assume that the exchange taking place via the connection 28-2 is to transmit urgent repeatable healthcare-related information. Due to the urgency, or relative "importance" of the transmission, the VM 22-1 may refrain from closing the connection 28-2 until the transmission is complete despite the transmission being repeatable. For another example, assume that the exchange is to download an update for minor bug fixes via the connection 28-3 for a non-critical application installed to the VM 22-1. Because the update and application are not critical, and thus the exchange is not relatively "important," the VM 22-1 may stop the download and close the connection before the download completes.

In some implementations, if the VM 22-1 makes a determination to refrain from closing a connection until an exchange is complete, the VM 22-1 can indicate the determination, and/or current status of the connection, to the hypervisor 18 via the connection closure report 50. For example, assume that time-sensitive information is being transmitted from the VM 22-1 to the entity 30-2 over the connection 28-3. Because the information is time-sensitive, the VM 22-1 can determine to refrain from closing the connection 28-3 until the transmission is complete. The VM 22-1 can indicate this determination to the hypervisor 18 with the connection closure report 50 (e.g., a value of "SUSP/C" for the connection). In some implementations, the connection closure report 50 can further indicate an estimated time of completion for the transmission. In some implementations, the hypervisor 18 can determine whether to permit the transmission to continue or to close the connection anyway. For example, if the estimated time of completion indicated by the connection closure report 50 for the transmission occurring over connection 28-3 is 25 minutes, the hypervisor 18 may close the connection 28-3 before the transmission completes regardless of the relative importance of the transmission.

The existing connection module 24 can determine whether the connection(s) 28 indicated by the connection information 46 have been closed. If the connection(s) have been closed, the hypervisor 18 can utilize the snapshot handler 40 to create a snapshot 52 of the VM 22-1. If the connection(s) have not been closed, the hypervisor 18 can determine whether to refrain from creating the snapshot 52 of the VM 22-1 or to proceed with creating the snapshot 52. For example, if the connection 28-1 has not been closed, and the connection information 46 indicates a relatively low probability that the connection 28-1 being snapshotted will cause non-repeatable information to be repeated, the hypervisor 18 may proceed with creating the snapshot 52. For another example, if the hypervisor 18 determines that there is a relatively high probability of the VM 22-1 experiencing imminent and/or unrecoverable information loss (e.g., from a crash, loss of assigned compute resources, storage device malfunction, etc.), the hypervisor 18 may proceed with creating the snapshot 52.

As described previously, a snapshot generally refers to a set of data that preserves a state of a machine at a certain point in time, or over a certain time period. In some virtualization techniques, a snapshot may be a copy of a virtual machine's disk file. Alternatively, in some other techniques, a snapshot is data extracted from the VM that is sufficient to restore the VM to a state that is identical to the state of the VM when the snapshot was captured. For example, the snapshot 52 can be, or otherwise include, a copy of all data associated with the VM 22-1. For another example, the snapshot 52 can include only the data from the VM 22-1 required to restore the VM 22-1 to a previous state. As such, in some implementations, the size of a snapshot (e.g., a quantity of storage resources utilized by the snapshot) can be smaller than the size of the active VM.

In some implementations, a snapshot, such as snapshot 52, can be established at a particular point in time, and can be subsequently modified based on changes to the VM subsequent to creation of the snapshot. More specifically, rather than storing information reflective of a current state of a VM, some techniques create snapshots that store changes made to VMs following the creation of the snapshots. By using this technique, the size of the snapshot can be limited to the degree of changes made to the data areas of the corresponding VM.

For example, assume that the snapshot 52 of the VM 22-1 is created by the snapshot handler 40 using the technique described above. At the time T2, the snapshot 52 would require few storage resources, as at the exact time the snapshot 52 is created there have not been any changes made to the data areas of the VM 22-1. However, if large quantities of files are deleted subsequent to creation of the snapshot 52, the deleted files would be added to the snapshot 52 to reflect changes made to the VM 22-1, thus increasing the size of the snapshot 52.

Turning to Figure 1C, Figure 1C illustrates the computing environment 10 at a third time T3 subsequent to the first time T1 according to some implementations of the present disclosure. It should be noted that, in some implementations, the time T3 can be subsequent to the time T2 illustrated in Figure 1B. Alternatively, in some implementations, time T2 and T3 can refer to the same time or period of time, or discrete periods of time that at least partially overlap. In particular, once the snapshot 52 is created with the snapshot handler 40, the hypervisor 18 may receive a request to restore the VM 22-1 based on the snapshot 52, or may otherwise determine to restore the VM 22-1 based on the snapshot 52.

In some implementations, the hypervisor 18 can provide restoration instructions 54 to the VM 22-1. The restoration instructions 54 can instruct the VM 22-1 to restore its state to the previous state captured in the snapshot 52. Alternatively, the hypervisor can restore the VM 22-1 to the previous state captured in the snapshot 52.

As connections 28-2 and 28-3 were closed prior to creation of the snapshot 52, restoration of the VM 22-1 to the state captured in the snapshot 52 will not cause the VM 22-1 to restore connections 28-2 and 28-3. However, if connections 28-2 and 28-3 are connections regularly opened by the VM 22-1, the VM 22-1 may re-open connections 28-2 and 28-3 during normal operations subsequent to restoration from the snapshot 52. For example, if the connection 28-2 is a connection over which regular status updates are provided to a database, the VM 22-1 may re-establish the connection 28-2 with the entity 30-1 to provide further status updates.

In some implementations, the VM 22-1 can indicate to the hypervisor 18 whether restoration from the snapshot 52 is successful. The VM 22-1 can indicate the results of the restoration process via a restoration report 56. The restoration report 56 can indicate whether any particular information was unable to be retrieved from the snapshot 52, whether any applications were unable to be executed, etc.

In some implementations, at time T3, the hypervisor 18 can determine to create a snapshot of another VM, such as VM 22-2. To do so, the hypervisor 18 can perform some (or all) of the operations described with regards to Figures 1A-1C. For example, the hypervisor 18 can cause all existing connections between the VM 22-2 and entities 30 to be closed. The hypervisor 18 can then create a snapshot of the VM 22-2.

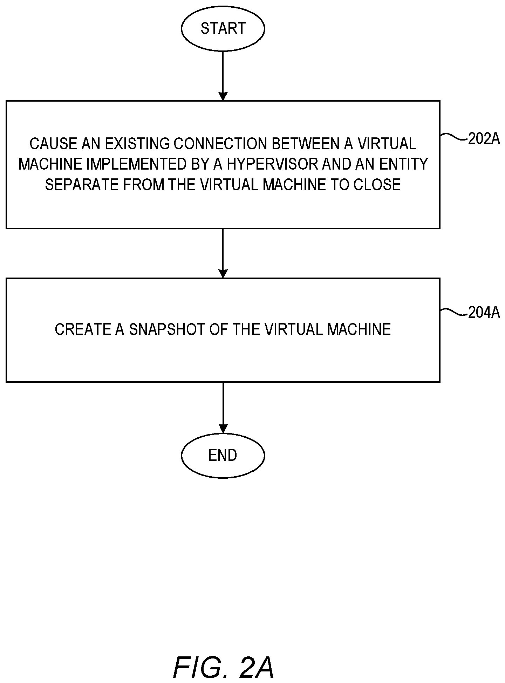

Figure 2A is a flowchart of a method for creating race-free virtual machine snapshots according to some implementations of the present disclosure. Figure 2A will be discussed in conjunction with Figures 1A-1C. The hypervisor 18 of the host computing system 12 causes an existing connection 28-2 between the VM 22-1 implemented by the hypervisor 18 and an entity 30-1 separate from the VM 22-1 to close (Figure 2A, block 202A). The hypervisor 18 creates a snapshot 52 of the VM 22-1 (Figure 2A, block 204A).

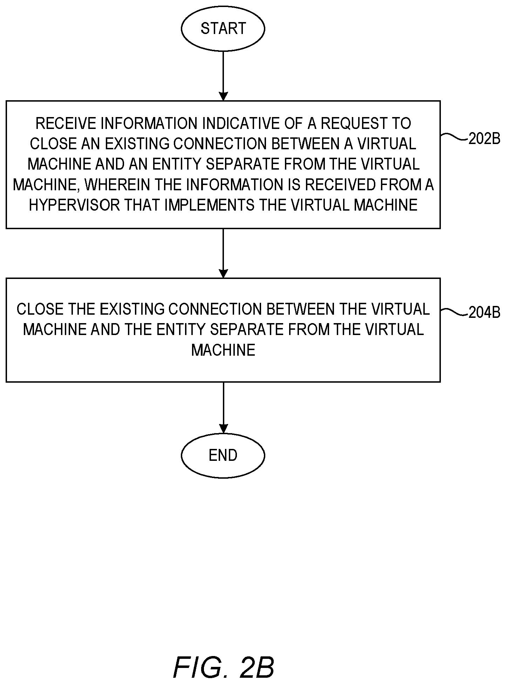

Figure 2B is a flowchart of a method for closing existing connections to facilitate creation of race-free virtual machine snapshots according to some implementations of the present disclosure. Figure 2B will be discussed in conjunction with Figures 1A-1C. The VM 22-1 receives information indicative of a request 48 to close an existing connection 28-2 between the VM 22-1 and an entity 30-1 separate from the VM 22-2, wherein the information (e.g., request 48) is received from the hypervisor 18 that implements the VM 22-1 (Figure 2B, block 202B). The VM 22-1 closes the existing connection 28-2 between the VM 22-1 and the entity 30-1 separate from the VM 22-1 (Figure 2B, block 204B).

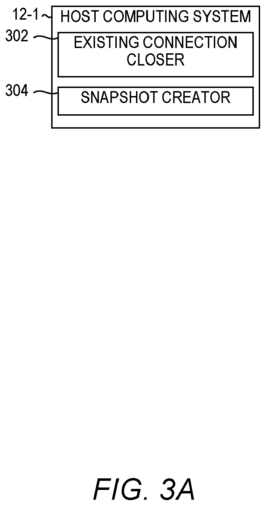

Figure 3A is a block diagram of a host computing system 12-1 suitable for implementing aspects illustrated in Figures 1A-1C according to some implementations of the present disclosure. The host computing system 12-1 implements identical functionality as that described above with regard to the host computing system 12. The host computing system 12-1 includes an existing connection closer 302 that is configured to cause an existing connection between a VM implemented by a hypervisor executed on the host computing system 12-1 and an entity separate from the VM.

The existing connection closer 302 may include executable software instructions configured to program a processor device to implement the functionality of causing an existing connection between a VM and an entity separate from the VM to close, may comprise circuitry including, by way of non-limiting example, an application-specific integrated circuit (ASIC), field-programmable gate array (FPGA), or may comprise a combination of executable software instructions and circuitry.

The host computing system 12-1 also includes a snapshot creator 304 that is configured to create a snapshot of the VM. The snapshot preserves the state of the VM at a particular instance in time. The snapshot creator 304 may include executable software instructions configured to program a processor device to implement the functionality of creating a snapshot for a VM, may comprise circuitry including, by way of non-limiting example, an ASIC, FPGA, or may comprise a combination of executable software instructions and circuitry.

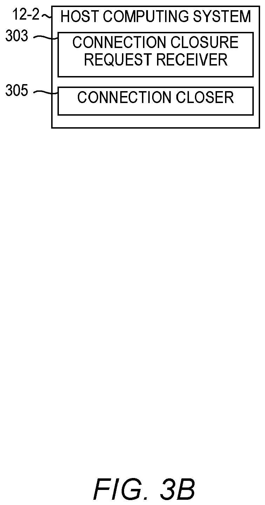

Figure 3B is a block diagram of a host computing system 12-2 suitable for implementing aspects illustrated in Figures 1A-1C according to some implementations of the present disclosure. The host computing system 12-2 implements identical functionality as that described above with regard to the host computing system 12. The host computing system 12-2 includes a connection closure request receiver 303 that is configured to receive information indicative of a request to close an existing connecton between a VM and an entity separate from the VM, wherein the information is received from a hypervisor executed on the host computing system 12 that implements the VM.

The connection closure request receiver 303 may include executable software instructions configured to program a processor device to implement the functionality of receiving information indicative of a request to close an existing connection, may comprise circuitry including, by way of non-limiting example, an application-specific integrated circuit (ASIC), field-programmable gate array (FPGA), or may comprise a combination of executable software instructions and circuitry.

The host computing system 12-2 also includes a connection closer 305 that is configured to close the existing connection between the VM and the entity separate from the VM. The connection closer 305 may include executable software instructions configured to program a processor device to implement the functionality of closing an existing connection between a VM and an entity separate from the VM, may comprise circuitry including, by way of non-limiting example, an ASIC, FPGA, or may comprise a combination of executable software instructions and circuitry.

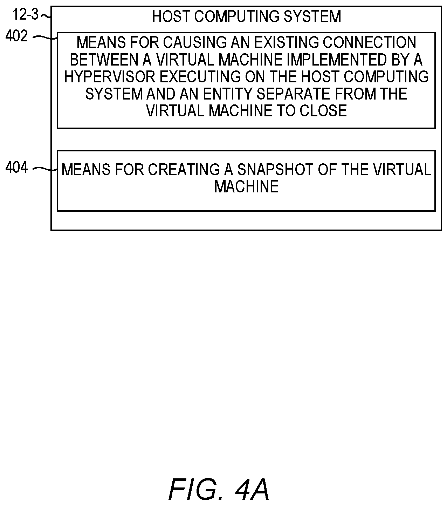

Figure 4A is a block diagram of a host computing system 12-3 according to some implementations. The host computing system 12-3 implements identical functionality as that described above with regard to the host computing system 12. In this implementation, the host computing system 12-3 includes a means 402 for causing, by a hypervisor executing on the host computing system 12-3, an existing connection between a virtual machine implemented by the hypervisor and an entity separate from the virtual machine to close. The means 402 may be implemented in any number of manners, including, for example, via the existing connection closer 302 illustrated in Figure 3A, or the existing connection module 24 of Figures 1A-1C. The means 402 may, in some implementations, provide an application programming interface that may be invoked by a computing process to send a connection closure request, and/or may offer a user interface by which an operator can request that an existing connection be closed.

The host computing system 12-3 also includes a means 404 for creating a snapshot. The means 404 may be implemented in any number of manners, including, for example, via the snapshot creator illustrated in Figure 3A, or the snapshot handler 40 of Figures 1A-1C. The means 404 may, in some implementations, provide an application programming interface that may be invoked by a computing process to send a snapshot creation request, and/or may offer a user interface by which an operator can request that a snapshot of a VM be created.

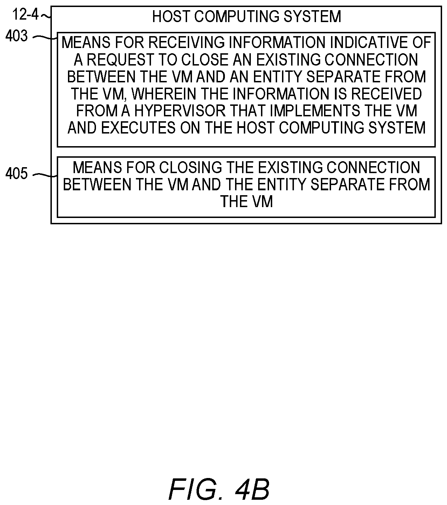

Figure 4B is a block diagram of a host computing system 12-4 according to some other implementations. The host computing system 12-4 implements identical functionality as that described above with regard to the host computing system 12. In this implementation, the host computing system 12-4 includes a means 403 for receiving information indicative of a request to close an existing connection between a VM and an entity separate from the VM, wherein the information is received from a hypervisor that implements the VM. The means 403 may be implemented in any number of manners, including, for example, via the connection closure request receiver 303 illustrated in Figure 3B, or the virtual network interface module 32 of Figures 1A-1C. The means 403 may, in some implementations, provide an application programming interface that may be invoked by a computing process to send information indicative of a request to close an existing connection, and/or may offer a user interface by which an operator can send information indicative of a request to close an existing connection.

The host computing system 12-4 also includes a means 405 for closing the existing connection between the VM and the entity separate from the VM. The means 405 may be implemented in any number of manners, including, for example, via the connection closer 305 illustrated in Figure 3B, or the connection manager 34 of Figures 1A-1C.

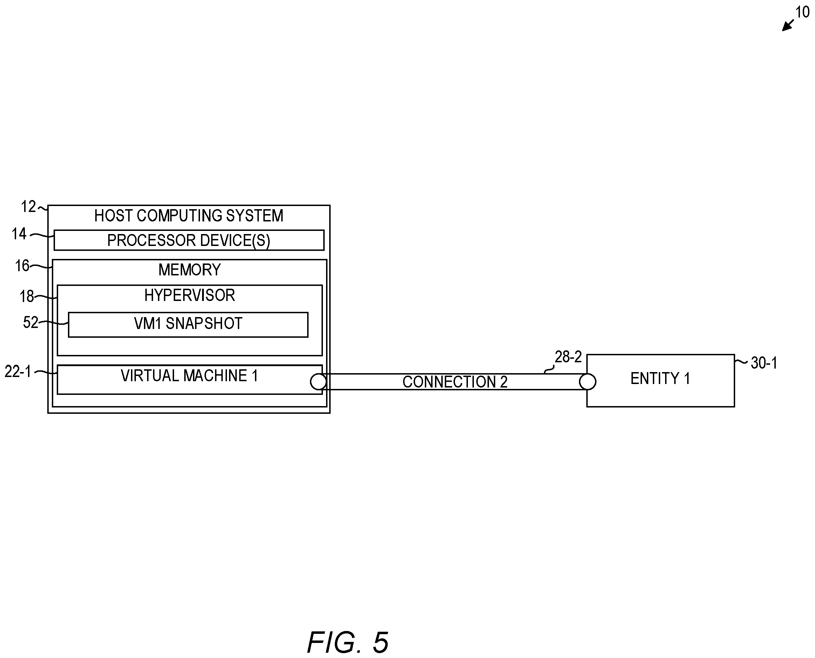

Figure 5 is a simplified block diagram of the computing environment 10 illustrated in Figures 1A and 1B, according to some implementations of the present disclosure. The host computing system 12 includes the memory 16 and the processor device(s) 14, which are coupled to the memory 16. The processor device(s) 14 are to cause an existing connection between a VM 22-1 implemented by a hypervisor 18 that executes on the host computing system 12 and an entity 30-1 separate from the VM 22-1 to close. The processor device(s) 14 are to create a snapshot 52 of the VM 22-1.

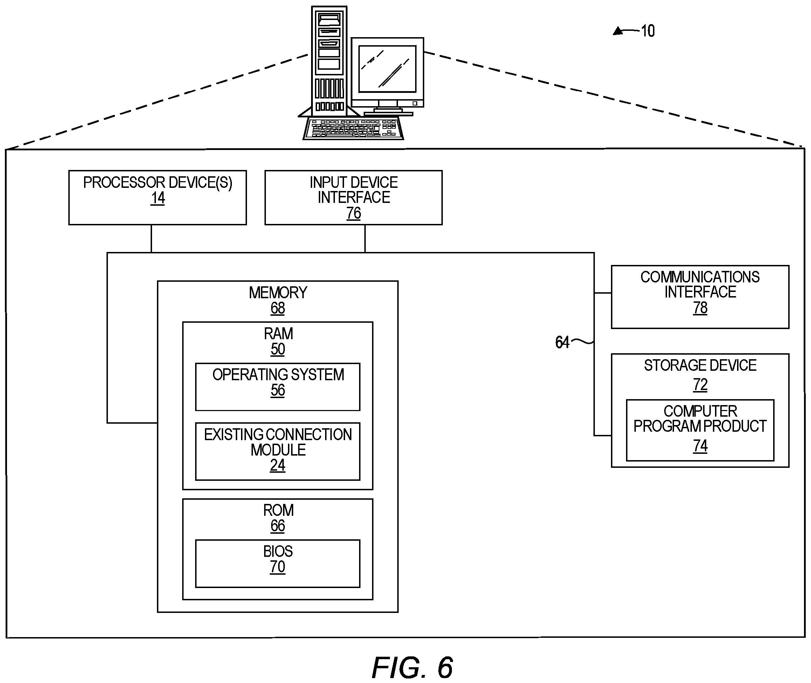

Figure 6 is a block diagram of the host computing system 12 suitable for implementing examples according to one example. The host computing system 12 may comprise any computing or electronic device(s) capable of including firmware, hardware, and/or executing software instructions to implement the functionality described herein, such as a computer server, a desktop computing device, a laptop computing device, a smartphone, a computing tablet, or the like. The host computing system 12 includes the processor device(s) 14, the memory 16, and a system bus 64. The system bus 64 provides an interface for system components including, but not limited to, the memory 16 and the processor device(s) 14. The processor device(s) 14 can be any commercially available or proprietary processor.

The system bus 64 may be any of several types of bus structures that may further interconnect to a memory bus (with or without a memory controller), a peripheral bus, and/or a local bus using any of a variety of commercially available bus architectures. The memory 16 may include non-volatile memory 66 (e.g., read-only memory (ROM), erasable programmable read-only memory (EPROM), electrically erasable programmable read-only memory (EEPROM), etc.), and volatile memory 68 (e.g., random-access memory (RAM)). A basic input/output system (BIOS) 70 may be stored in the non-volatile memory 66 and can include the basic routines that help to transfer information between elements within the host computing system 12. The volatile memory 68 may also include a high-speed RAM, such as static RAM, for caching data.

The host computing system 12 may further include or be coupled to a non-transitory computer-readable storage medium such as the storage device 72, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 72 and other drives associated with computer-readable media and computer-usable media may provide non-volatile storage of data, data structures, computer-executable instructions, and the like.

A number of modules can be stored in the storage device 72 and in the volatile memory 68, including an operating system and one or more program modules, such as the existing connection module 24, which may implement the functionality described herein in whole or in part. All or a portion of the examples may be implemented as a computer program product 74 stored on a transitory or non-transitory computer-usable or computer-readable storage medium, such as the storage device 72, which includes complex programming instructions, such as complex computer-readable program code, to cause the processor device(s) 14 to carry out the steps described herein. Thus, the computer-readable program code can comprise software instructions for implementing the functionality of the examples described herein when executed on the processor device(s) 14. The processor device(s) 14, in conjunction with the existing connection module 24 in the volatile memory 68, may serve as a controller, or control system, for the host computing system 12 that is to implement the functionality described herein.

Because the existing connection module 24 is a component of the host computing system 12, functionality implemented by the existing connection module 24 may be attributed to the host computing system 12 generally. Moreover, in examples where the existing connection module 24 comprises software instructions that program the processor device(s) 14 to carry out functionality discussed herein, functionality implemented by the existing connection module 24 may be attributed herein to the processor device(s) 14.

An operator, such as a user, may also be able to enter one or more configuration commands through a keyboard (not illustrated), a pointing device such as a mouse (not illustrated), or a touch-sensitive surface such as a display device. Such input devices may be connected to the processor device(s) 14 through an input device interface 76 that is coupled to the system bus 64 but can be connected by other interfaces such as a parallel port, an Institute of Electrical and Electronic Engineers (IEEE) 1394 serial port, a Universal Serial Bus (USB) port, an IR interface, and the like. The host computing system 12 may also include the communications interface 78 suitable for communicating with the network as appropriate or desired. The host computing system 12 may also include a video port configured to interface with the display device, to provide information to the user.

Other computer system designs and configurations may also be suitable to implement the systems and methods described herein. The following examples illustrate various additional implementations in accordance with one or more aspects of the disclosure.

Example 1 is a method comprising receiving, by a virtual machine executed on one or more processor devices, information indicative of a request to close an existing connection between the virtual machine and an entity separate from the virtual machine, wherein the information is received from a hypervisor that implements the virtual machine; and closing, by the virtual machine, the existing connection between the virtual machine and the entity separate from the virtual machine.

Example 2 is the method of example 1, wherein the method further comprises receiving, by the virtual machine from the hypervisor, information indicating that a snapshot of the virtual machine has been created by the hypervisor; and recreating, by the virtual machine, the existing connection between the virtual machine and the entity separate from the virtual machine.

Example 3 is the method of example 1, wherein the method further comprises making, by the virtual machine, a determination that a particular quantity of time has passed since receipt of the information indicative of the request to close the existing connection; and based on the determination, recreating, by the virtual machine, the existing connection between the virtual machine and the entity separate from the virtual machine.

Example 4 is the method of example 1, wherein receiving the information indicative of the request to close the existing connection comprises receiving, by the virtual machine from the hypervisor, information indicative of a request to close a first existing connection of a plurality of existing connections between the virtual machine and one or more entities separate from the virtual machine.

Example 5 is the method of example 1, wherein, prior to receiving the information indicative of the request to close the first existing connection, the method comprises receiving, by the virtual machine from the hypervisor, information indicative of a request to report any existing connections between the virtual machine and entities separate from the virtual machine; and providing, by the virtual machine to the hypervisor, information indicative of the plurality of existing connections between the virtual machine and the one or more entities separate from the virtual machine.

Example 6 is the method of example 5, wherein receiving the information indicative of the request to close the first existing connection of the plurality of existing connections comprises receiving, by the virtual machine from the hypervisor, information that identifies the first existing connection of the plurality of existing connections as a non-repeatable connection that is to be closed prior to snapshot creation.

Example 7 is the method of example 1, wherein the method further comprises providing, by the virtual machine to the hypervisor, information indicating that the existing connection has been closed.

Example 8 is the method of example 1, wherein closing the existing connection between the virtual machine and the entity separate from the virtual machine comprises stopping, by the virtual machine, execution of a virtual network interface module of the virtual machine.

Example 9 is the method of example 1, wherein closing the existing connection between the virtual machine and the entity separate from the virtual machine comprises determining, by the virtual machine, that execution of a virtual network interface module of the virtual machine has been stopped by the hypervisor.

Example 10 is a host computing system comprising a memory, and a processor device coupled to the memory. A hypervisor executing on the host computing system implements a virtual machine. The processor device is to receive information indicative of a request to close an existing connection between a virtual machine and an entity separate from the virtual machine, wherein the information is received from a hypervisor that implements the virtual machine; and close the existing connection between the virtual machine and the entity separate from the virtual machine.

Example 11 is the host computing system of example 10, wherein the processor device is further to receive, from a hypervisor that implements the virtual machine, information indicating that a snapshot of the virtual machine has been created by the hypervisor; and recreate the existing connection between the virtual machine and the entity separate from the virtual machine.

Example 12 is the host computing system of example 10, wherein the processor device is further to make a determination that a particular quantity of time has passed since receipt of the information indicative of the request to close the existing connection; and based on the determination, recreate the existing connection between the virtual machine and the entity separate from the virtual machine.

Example 13 is the host computing system of example 10, wherein receiving the information indicative of the request to close the existing connection comprises: receiving, from the hypervisor, information indicative of a request to close a first existing connection of a plurality of existing connections between the virtual machine and one or more entities separate from the virtual machine.

Example 14 is the host computing system of example 10, wherein, prior to receiving the information indicative of the request to close the first existing connection, the processor device is to receive, from the hypervisor, information indicative of a request to report any existing connections between the virtual machine and entities separate from the virtual machine; and provide to the hypervisor, information indicative of the plurality of existing connections between the virtual machine and the one or more entities separate from the virtual machine.

Example 15 is the host computing system of example 14, wherein receiving the information indicative of the request to close the first existing connection of the plurality of existing connections comprises receiving, from the hypervisor, information that identifies the first existing connection of the plurality of existing connections as a non-repeatable connection that is to be closed prior to snapshot creation.

Example 16 is the host computing system of example 10, wherein the processor device is further to provide, to the hypervisor, information indicating that the existing connection has been closed.

Example 17 is the host computing system of example 10, wherein closing the existing connection between the virtual machine and the entity separate from the virtual machine comprises stopping execution of a virtual network interface module of the virtual machine.

Example 18 is the host computing system of example 10, wherein closing the existing connection between the virtual machine and the entity separate from the virtual machine comprises determining that execution of a virtual network interface module of the virtual machine has been stopped by the hypervisor.

Example 19 is a computer program product stored on a non-transitory computer-readable storage medium and including instructions to cause a processor device to receive information indicative of a request to close an existing connection between a virtual machine and an entity separate from the virtual machine, wherein the information is received from a hypervisor that implements the virtual machine; and close the existing connection between the virtual machine and the entity separate from the virtual machine.

Example 20 is the computer program product of example 19, wherein the processor device is further to receive, from the hypervisor, information indicating that a snapshot of the virtual machine has been created by the hypervisor; and recreate the existing connection between the virtual machine and the entity separate from the virtual machine.

Individuals will recognize improvements and modifications to the preferred examples of the disclosure. All such improvements and modifications are considered within the scope of the concepts disclosed herein and the claims that follow.

## Claims

1. A method, comprising:
causing, by a hypervisor executing on a host computing system, an existing connection between a virtual machine implemented by the hypervisor and an entity separate from the virtual machine to close; and
creating, by the hypervisor, a snapshot of the virtual machine.

2. The method of claim 1, wherein, prior to causing the existing connection between the virtual machine and the entity separate from the virtual machine to close, the method comprises:
determining, by the hypervisor, that the existing connection exists between the virtual machine and the entity separate from the virtual machine.

3. The method of claim 2, wherein determining that the existing connection exists comprises:
detecting, by the hypervisor, the existing connection between the virtual machine and the entity separate from the virtual machine; or.

4. The method of claim 2, wherein determining that the existing connection exists comprises:
receiving, by the hypervisor from the virtual machine, information indicative of the existing connection between the virtual machine and the entity separate from the virtual machine and optionally wherein, prior to receiving the information indicative of the existing connection, the method comprises:
providing, by the hypervisor to the virtual machine, information indicative of a request to report any existing connections between the virtual machine and entities separate from the virtual machine and further optionally, wherein
receiving the information indicative of the existing connection between the virtual machine and the entity separate from the virtual machine comprises:
receiving, by the hypervisor, information indicative of a plurality of existing connections between the virtual machine and a respective plurality of entities separate from the virtual machine; and
identifying, by the hypervisor, a first existing connection of the plurality of existing connections as a non-repeatable connection that is to be closed prior to snapshot creation.

5. The method of claim 1, wherein causing the existing connection between the virtual machine implemented by the hypervisor and the entity separate from the virtual machine to close comprises:
providing, by the hypervisor to the virtual machine, information indicative of a request to close the existing connection between the virtual machine and the entity separate from the virtual machine and optionally.

6. The method of claim 5, wherein providing the information indicative of the request to close the existing connection further comprises either:
receiving, by the hypervisor from the virtual machine, information indicating that the existing connection has been closed; or
providing, by the hypervisor, a request to close any existing connections between the virtual machine and entities separate from the virtual machine.

7. The method of claim 5, wherein providing the information indicative of the request to close the existing connection between the virtual machine and the entity separate from the virtual machine further comprises:
determining, by the hypervisor, that the existing connection between the virtual machine and the entity separate from the virtual machine has been closed.

8. The method of claim 1, wherein causing the existing connection between the virtual machine implemented by the hypervisor and the entity separate from the virtual machine to close comprises:
stopping, by the hypervisor, execution of a virtual network interface module of the virtual machine.

9. The method of claim 1, wherein the method further comprises:
causing, by the hypervisor, a second existing connection between a second virtual machine implemented by the hypervisor and an entity separate from the second virtual machine to close; and
creating, by the hypervisor, a snapshot of the second virtual machine and optionally the method further comprises:
determining, by the hypervisor, that a third existing connection between a third virtual machine implemented by the hypervisor and an entity separate from the third virtual machine is repeatable; and
creating, by the hypervisor, a snapshot of the third virtual machine.

10. The method of claim 1, wherein creating the snapshot of the virtual machine comprises:
creating, by the hypervisor, the snapshot of the virtual machine, wherein the snapshot of the virtual machine is descriptive of a current state of the virtual machine; and
wherein the method further comprises causing, by the hypervisor, the virtual machine to be restored to the current state based on the snapshot of the virtual machine.

11. A host computing system comprising:
a memory;
one or more processor devices to:
cause an existing connection between a virtual machine implemented by a hypervisor and an entity separate from the virtual machine to close, wherein the hypervisor executes on the host computing system; and
create a snapshot of the virtual machine.

12. The host computing system of claim 11, wherein, prior to causing the existing connection between the virtual machine and the entity separate from the virtual machine to close, the processor devices are to:
determine that the existing connection exists between the virtual machine and the entity separate from the virtual machine.

13. The host computing system of claim 12, wherein determining that the existing connection exists comprises either:
detecting the existing connection between the virtual machine and the entity separate from the virtual machine; or

14. The host computing system of claim 12, wherein determining that the existing connection exists comprises:
receiving, from the virtual machine, information indicative of the existing connection between the virtual machine and the entity separate from the virtual machine and optionally, wherein, prior to receiving the information indicative of the existing connection, the processor devices are to:
provide, to the virtual machine, information indicative of a request to report any existing connections between the virtual machine and entities separate from the virtual machine.

15. A non-transitory computer-readable storage medium that includes executable instructions to cause one or more processor devices to:
cause an existing connection between a virtual machine implemented by a hypervisor and an entity separate from the virtual machine to close, wherein the hypervisor executes on the one or more processor devices; and
create a snapshot of the virtual machine.
